# EUROPÄISCHE PATENTSCHRIFT

(11) **EP 1 770 852 B1**
(45) Veröffentlichungstag und Bekanntmachung des Hinweises auf die Patenterteilung: **30.06.2010**
(21) Anmeldenummer: 05021555.7
(22) Anmeldetag: 01.10.2005
(51) Int. Cl.: H02P 1/02, B23Q 5/04

(54) **Maschinenanlage mit einer Arbeitsmaschine**
Machine unit with a working machine
Parc machine avec une machine de travail

(43) Veröffentlichungstag der Anmeldung: 04.04.2007
(73) Patentinhaber: Posch, Jürgen, 73035 Göppingen (DE)
(72) Erfinder: Posch, Jürgen, 73035 Göppingen (DE)
(74) Vertreter: Riedel, Peter

(56) Entgegenhaltungen:
- DE-A1- 2 143 728
- DE-A1- 19 801 255
- US-A- 3 225 542
- US-A- 3 323 839
- US-B1- 6 394 206
- PATENT ABSTRACTS OF JAPAN Bd. 005, Nr. 051 (E-051), 10. April 1981 (1981-04-10) & JP 56 001786 A (TOSHIBA CORP), 9. Januar 1981 (1981-01-09)

## Beschreibung

Die Erfindung betrifft eine Maschinenanlage mit einer Arbeitsmaschine. Derartige Maschinenanlagen sind insbesondere als Aufbereitungsanlagen auf dem Gebiet der Rohstoffgewinnung bzw. als Recycling-, Shredder- oder Minenanlagen eingesetzt und umfassen eine Arbeitsmaschine beispielsweise in Form eines Shredders, eines Backenbrechers oder dgl. sowie einen Antriebsmotor.

Derartige Maschinenanlagen können mobil oder stationär ausgeführt sein und beinhalten neben der Arbeitsmaschine und dem zugeordneten Antriebsmotor auch Komponenten einer Energieversorgung. Hierbei werden nach dem Stand der Technik zwei verschiedenen Bauformen unterschieden. In einer vorbekannten Bauform ist ein Elektromotor zum Antrieb der Arbeitsmaschine vorgesehen, der im Bereich der Nennlast der Arbeitsmaschine mit einem hohen Wirkungsgrad unter guter Energieausnutzung arbeitet. Zur Energieversorgung kann die Maschinenanlage wahlweise einen von einem Dieselmotor angetriebenen Generator oder eine Einspeisung der elektrischen Energie aus dem öffentlichen Stromnetz aufweisen. Problematisch bei einer derartigen Anlage ist das Verhalten beim Anfahrbetrieb oder beim Auftreten von Spitzenlasten. Bei geeigneten Elektromotoren wurde im Anfahrbetrieb ein Anlaufstrom gemessen, der etwa dem 2- bis 2,5-fachen des elektrischen Betriebsstromes bei gewöhnlicher Last bzw. bei Nennlast entspricht.

Bei einer elektrischen Versorgung mittels eines Generators müssen sowohl der Generator selbst als auch der antreibende Dieselmotor in Größe und Leistungsfähigkeit dahingehend ausgelegt sein, daß der erforderliche Anlaufstrom bereitgestellt werden kann. Auch die elektrische Anlage einschl. der Zuleitungen, Steuerelemente oder dgl. muß für entsprechend hohe Ströme ausgelegt sein, was zu entsprechenden Investitionskosten führt. Bei Nennlast arbeitet der überdimensionierte Generator nicht im Bereich des optimalen Wirkungsgrades, was sich im Kraftstoffverbrauch und den Betriebskosten niederschlägt.

Vergleichbares gilt auch für eine Einspeisung der elektrischen Energie aus einem öffentlichen Stromnetz. Hierbei ist noch zu berücksichtigen, daß bei den regelmäßig erforderlichen größeren Maschinenleistungen im Bereich oberhalb von 100 kW eine erhebliche Netzbelastung auftritt. Für elektrische Großverbraucher gelten mitunter Tarife für die Strombezugskosten, die sich an der mittleren Leistung bzw. der Nennleistung orientieren. Spitzenbelastungen durch Stromspitzen des Anlagestromes belasten die bestehenden Stromversorgungen, wofür höhere Strombereitstellungskosten berechnet werden. Anlagen mit starken Leistungsschwankungen, die im Anfahrbetrieb oder bei betriebsbedingten Spitzenbelastungen auftreten können, weisen hier hinsichtlich ihrer Wirtschaftlichkeit ein Verbesserungspotential auf.

In einer alternativen vorbekannten Bauform ist zum Antrieb der Arbeitsmaschine ein Hydraulikmotor vorgesehen, der seinerseits dieselmotorisch mittels einer Hydraulikpumpe angetrieben ist. Derartige Anlagen haben einen vergleichsweise geringen Wirkungsgrad. Im Dauerbetrieb im Bereich der Nennlast führen Schlupf und Wärmeverluste oder dgl. zu einer nicht optimalen Energieausbeute. Im Dauerbetrieb konnte im Vergleich zum elektromotorischen Antrieb ein erhöhter Verschleiß bzw. eine kürzere Lebensdauer beobachtet werden.

Aus Dokument US-A-4,707,644 (Miller et al.) ist eine andere Bauform bekannt.

Der Erfindung liegt die Aufgabe zugrunde, eine Maschinenanlage mit einer Arbeitsmaschine anzugeben, die bei gegebener Nennleistung verringerte Energiekosten aufweist.

Diese Aufgabe wird durch eine Maschinenanlage mit den Merkmalen des Anspruchs 1 gelöst.

Es wird eine Maschinenanlage mit einer Arbeitsmaschine vorgeschlagen, die einen für den Dauerbetrieb der Arbeitsmaschine bis einschließlich der Nennlast vorgesehenen Elektromotor und einen für Spitzenlasten und/oder den Anfahrbetrieb der Arbeitsmaschine vorgesehenen Hydraulikmotor umfasst. Aus dem Stillstand der Anlage heraus wird die Arbeitsmaschine ohne den Elektromotor zunächst allein durch die Leistung des Hydraulikmotors im Anfahrbetrieb hochgefahren. Hierbei wird die gute Momentenausnutzung des Hydraulikantriebes aus dem Stillstand heraus und bei niedriger Drehzahl genutzt. Im Vergleich zu einem elektromotorischen Antrieb ist die erforderliche Antriebsleistung der Hydraulikpumpe gering. Ein zum Antrieb der Hydraulikpumpe vorgesehener Verbrennungsmotor oder wahlweise auch ein Elektromotor unterliegt keiner spürbaren Spitzenbelastung. Das Auftreten von Spitzenströmen ist vermieden. Ein entsprechend klein ausgelegter Verbrennungsmotor kann mit hohem Wirkungsgrad arbeiten. Eine alternativ vorgesehene Einspeisung aus dem Netz wird von Spitzenströmen frei-gehalten.

Es sind Mittel zum wahlweisen Zuschalten des Elektromotors und/oder des Hydraulikmotors vorgesehen. Nach Erreichen des Bereiches der Nennlast der Arbeitsmaschine kann hiermit der Antrieb vom Hydraulikmotor auf den Antrieb durch den Elektromotor umgeschaltet werden. Anlaufbedingte Spitzenströme sind, nicht mehr zu erwarten. Der Elektromotor arbeitet hier mit hohem Wirkungsgrad, ohne seinerseits mit Spitzenströmen die elektrische Anlage zu belasten. Die Generatoreinheit aus Verbrennungsmotor und Generator und/oder der Netzanschluß können entsprechend gering dimensioniert sein. Insgesamt sind Energieverbrauch und Energiekosten deutlich gesenkt.

Als elektrische Energiequelle für den Elektromotor ist vorteilhaft ein durch einen Verbrennungsmotor insbesondere in Form eines Dieselmotors angetriebener Generator vorgesehen. Dies erlaubt eine netzunabhängige, autarke elektrische Energieversorgung nicht nur für die anlageneigene Arbeitsmaschine, sondern auch für weitere elektrische Verbraucher mit geringerer Leistung wie beispielsweise Fördereinrichtungen oder dergleichen. Die Maschinenanlage kann an beliebigen Orten auch in unzugänglichen Gegenden betrieben werden und erlaubt auch eine Ausbildung als mobile, in sich abgeschlossene kompakte Einheit.

Alternativ oder zusätzlich kann es auch zweckmäßig sein, als elektrische Energiequelle für den Elektromotor einen Anschluß an ein öffentliches Netz vorzusehen. Die Energiekosten im Vergleich zu einem dieselmotorischen Generatorbetrieb sind deutlich geringer.

Zweckmäßig sind als elektrische Energiequelle für den Elektromotor der Generator und zusätzlich ein Netzanschluß vorgesehen und wahlweise zuschaltbar. Dies erlaubt einen Aufbau der Maschinenanlage an unterschiedlichen Orten und dabei die Zuschaltung ans Netz abhängig von dessen örtlicher Verfügbarkeit. Insbesondere ist auch die Möglichkeit gegeben, bei Netzanschluß den Generator im sogenannten "Standby"-Betrieb mitlaufen zu lassen. Die elektrische Energieversorgung für die Grund- bzw. Nennlast wird über das Netz bereitgestellt, während betriebsbedingte Spitzenlasten durch den Generator abgedeckt werden können.

In vorteilhafter Weiterbildung ist als Energiequelle für den Hydraulikmotor eine durch einen Verbrennungsmotor angetriebene Hydraulikpumpe vorgesehen. Dieser Verbrennungsmotor kann separat vom Antriebsmotor des Generators ausgeführt sein. Vorteilhaft sind der Generator und die Hydraulikpumpe durch den gleichen Verbrennungsmotor angetrieben. Neben einer Senkung der Investitionskosten ist eine vereinfachte Möglichkeit gegeben, bei angestrebtem gleichförmigem Dauerbetrieb des Verbrennungsmotors mit näherungsweise konstanter Last und Drehzahl bedarfsweise zwischen dem hydraulischen und dem elektrischen Antrieb hin- und herzuschalten.

In bevorzugter Ausführung sind der Elektromotor und der Hydraulikmotor mechanisch in Reihe geschaltet und wirken gemeinsam auf die Arbeitsmaschine. Dabei ist zweckmäßig als Mittel zum wahlweisen Zuschalten eine Trennkupplung zwischen dem Elektromotor und dem Hydraulikmotor angeordnet. Unter Vermeidung von aufwendigen Getrieben zur Ankopplung bei Motoren kann der Hydraulikmotor mittels der Trennkupplung die Welle des Elektromotors antreiben, die ihrerseits auf die Arbeitsmaschine wirkt. Nach erfolgtem Anfahren wird der Elektromotor mit elektrischer Leistung versorgt und gleichzeitig der Hydraulikmotor mittels der Trennkupplung abgekoppelt. Ohne Wirkungsgradverluste kann der Elektromotor die Arbeitsmaschine im Dauerbetrieb antreiben, während im abgetrennten Hydraulikmotor keine Verlustleistung erzeugt wird. Zur Abdeckung von Spitzenlasten kann jedoch der Hydraulikmotor nach Belieben dem im Bereich seiner Nennlast arbeitenden Elektromotor zugeschaltet werden. Beide Motoren wirken gemeinsam über die Antriebswelle des Elektromotors auf die Arbeitsmaschine, woraus sich ein einfacher mechanischer Aufbau ergibt.

In einer bevorzugten Ausführung ist zwischen der elektrischen Energiequelle und dem Elektromotor ein Elektroverteiler angeordnet, an dem zusätzlich zur Arbeitsmaschine mindestens ein elektrischer Kleinverbraucher angeschlossen ist. Der Elektroverteiler übernimmt eine Steuerungs- und Verteilfunktion und stellt auch im hydraulischen Anlaufbetrieb eine Stromversorgung der Kleinverbraucher wie Fördereinrichtungen, angetriebene Bänder und Rinnen oder dgl. sicher. Er dient auch als Mittel zum wahlweisen Zuschalten des die Arbeitsmaschine antreibenden Elektromotors.

In vorteilhafter Weiterbildung weist die Arbeitsmaschine einen Schwungmassenantrieb auf. Dieser kann beispielsweise in Form eines Schwungrades oder dgl. ausgeführt sein. Bei entsprechend großer dynamischer Masse wird der betriebsbedingte Momentenverlauf geglättet. Drehmomentspitzen und damit einhergehende Stromspitzen im elektrischen Dauerbetrieb werden reduziert.

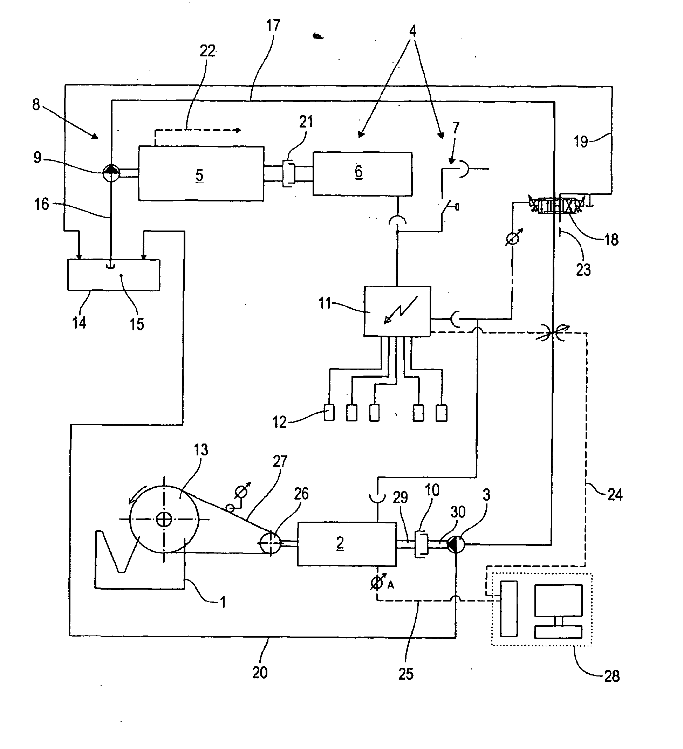

Ein Ausführungsbeispiel der Erfindung ist im Folgenden anhand der Zeichnung näher beschrieben. Die einzige Figur zeigt anhand eines Blockschaltbildes eine Maschinenanlage mit einer Arbeitsmaschine 1, die beispielhaft als schematisch dargestellter Backenbrecher zur Zerkleinerung von Steinen oder vergleichbarem Material ausgeführt ist. Die Maschinenanlage umfasst des weiteren einen Elektromotor 2 und einen Hydraulikmotor 3, die beide zum Antrieb der Arbeitsmaschine 1 vorgesehen sind.

Der Elektromotor 2 ist mittels eines Getriebes 26 und eines Riementriebes 27 fest an die Arbeitsmaschine 1 angekoppelt. Der Riementrieb 27 wirkt auf einen Schwungmassenantrieb 13 der Arbeitsmaschine 1, wobei im gezeigten Ausführungsbeispiel der Schwungmassenantrieb 13 als Schwungrad mit hoher dynamischer Massenträgheit ausgebildet ist und eine Vergleichmäßigung des Drehmomentenverlaufs unter Vermeidung von Drehmomentspitzen sicherstellt.

Koaxial zum Elektromotor 2 ist auf dessen der Arbeitsmaschine 1 abgewandten Seite der Hydraulikmotor 3 angeordnet, der mittels einer Trennkupplung 10 bedarfsweise mit dem Elektromotor 2 mechanisch in Reihe schaltbar ist. Eine Ausgangswelle 30 des Hydraulikmotors 3 liegt koaxial zu einer durchgehenden Antriebswelle 29 des Elektromotors 2. Im eingekoppelten Zustand der Trennkupplung 10 ist ein durchgehender Kraftfluß vom Hydraulikmotor 3 über die Ausgangswelle 30, die Trennkupplung 10 und die Antriebswelle 29 durch den Elektromotor 2 hindurch auf das Getriebe 26 und damit auf die Arbeitsmaschine 1 gegeben. Im ausgekuppelten Zustand der Trennkupplung 10 kann der Elektromotor 2 die Arbeitsmaschine 1 antreiben, ohne den Hydraulikmotor 3 mitzudrehen.

Zur Energieversorgung des Elektromotors 2 und des Hydraulikmotors 3 ist ein Verbrennungsmotor 5 vorgesehen, der im gezeigten Ausführungsbeispiel ein Dieselmotor ist. Ein elektrischer Generator 6 ist mittels einer Trennkupplung 21 an den Verbrennungsmotor 5 ankoppelbar und wandelt im angekoppelten Zustand der Trennkupplung 21 die mechanische Leistung des Verbrennungsmotors 5 in elektrische Leistung um. Demnach bildet die Baueinheit aus dem Verbrennungsmotor 5 und dem Generator 6 eine elektrische Energiequelle 4 für den Elektromotor 2. Alternativ oder zusätzlich kann als elektrische Energiequelle 4 ein Netzanschluß 7 vorgesehen sein, mittels dessen elektrische Energie aus einem öffentlichen Stromversorgungsnetz in die gezeigte Maschinenanlage eingespeist werden kann.

Zwischen den elektrischen Energiequellen 4 und dem Elektromotor 2 ist ein Elektroverteiler 11 angeordnet, an dem zusätzlich zum Elektromotor 2 der Arbeitsmaschine 1 eine Anzahl von schematisch dargestellten elektrischen Kleinverbrauchern 12 angeschlossen ist. Als elektrische Kleinverbraucher 12 können Fördereinrichtungen wie Gurtförderer, Rinnen oder dgl. zur Beschickung der Arbeitsmaschine 1 vorgesehen sein.

Für den Hydraulikmotor 3 ist als Energiequelle 8 eine durch den Verbrennungsmotor 5 angetriebene Hydraulikpumpe 9 vorgesehen. Es kann auch zweckmäßig sein, einen separaten Verbrennungsmotor zum Antrieb der Hydraulikpumpe 9 vorzusehen. Die Hydraulikpumpe 9 bezieht mittels einer Ansaugleitung 16 Hydraulikflüssigkeit 15 aus einem Hydrauliktank 14 und pumpt diese durch eine Druckleitung 17 zum Hydraulikmotor 3. Von dort wird die Hydraulikflüssigkeit 15 mittels einer Rücklaufleitung 20 in den Hydrauliktank 14 zurückgeführt. In der Druckleitung 17 ist ein elektromagnetisch betätigtes Ventil 18 angeordnet, mittels dessen die Durchflußmenge der Hydraulikflüssigkeit 15 bzw. der am Hydraulikmotor 3 anliegende hydrostatische Druck steuerbar ist. Bedarfsweise kann eine einstellbare Teilmenge oder sogar das gesamte Fördervolumen mittels einer Bypaßleitung 19 ohne Beaufschlagung des Hydraulikmotors 3 direkt in den Hydrauliktank 14 zurückgeführt werden, wodurch die Leistung des Hydraulikmotors 3 zwischen Stillstand und Vollast beliebig steuerbar ist. Bei vollständiger Rückführung der Hydraulikflüssigkeit 15 durch das Ventil 18 und die Bypaßleitung 19 ist der Hydraulikmotor 3 abgeschaltet.

Zur Steuerung der gezeigten Maschinenanlage ist eine Rechnereinheit 28 vorgesehen, die mittels Datenleitungen 22, 23, 24, 25 mit dem Verbrennungsmotor 5, dem Ventil 18, dem Elektroverteiler 11 und dem Elektromotor 2 verbunden ist.

Über eine bevorzugt in der Rechnereinheit 28 vorgenommene Steuerung und ggf. auch Regelung kann die gezeigte Maschinenanlage in nachfolgend beschriebenem Verfahren betrieben werden. Hierzu weist die Maschinenanlage Mittel auf, die zum wahlweisen Zuschalten des Eletkromotors 2 und/oder des Hydraulikmotors 3 auf die Arbeitsmaschine 1 vorgesehen sind. Diese Mittel umfassen die Rechnereinheit 28, den Elektroverteiler 11, das Ventil 18 und die Trennkupplungen 10, 21.

Aus dem Stillstand der Maschinenanlage heraus wird zunächst der Verbrennungsmotor 5 gestartet und auf Betriebsdrehzahl gebracht. Eine Drehzahlsteuerung bzw. -regelung sowie eine Überwachung derselben erfolgt mittels der Rechnereinheit 28 über die Datenleitung 22.

Der Generator 6 kann bereits zu Beginn mittels der Trennkupplung 21 an den Verbrennungsmotor 5 angekoppelt sein, um über den Elektroverteiler 11 - gesteuert mit der Rechnereinheit 28 und der Datenleitung 24 - eine Stromversorgung der elektrischen Kleinverbraucher sicherzustellen. Der Elektromotor 2 ist jedoch in der Startphase der Maschinenanlage durch den Elektroverteiler 11 von der elektrischen Energiequelle 4 abgekoppelt. Es kann auch zweckmäßig sein, den Generator 6 erst nach dem Anfahrbetrieb der Maschinenanlage bzw. der Arbeitsmaschine 1 anzukoppeln.

Für den Anfahrbetrieb der Arbeitsmaschine 1 treibt der Verbrennungsmotor 5 die Hydraulikpumpe 9 an, die ihrerseits über die Druckleitung 17 den Hydraulikmotor 3 antreibt. In der zuvor beschriebenen Weise ist der Hydraulikmotor 3 mittels der Trennkupplung 10 an die Arbeitsmaschine 1 angekoppelt. Die durchgehende Antriebswelle 29 des nicht unter Leistung stehenden Elektromotors 2 dreht frei mit. Dabei sind Maßnahmen getroffen, daß der Elektromotor 2 nicht als Generator arbeitet und deshalb keine elektrische Verlustleistung erzeugt.

Nachdem der Anfahrbetrieb der Arbeitsmaschine 1 abgeschlossen ist und die Arbeitsmaschine 1 im Bereich ihrer Nennlast arbeitet, wird das Ventil 18 mittels der Rechnereinheit 28 und der Datenleitung 23 derart umgeschaltet, daß die Hydraulikflüssigkeit 15 durch die Bypaßleitung 19 am Hydraulikmotor 3 vorbei direkt in den Hydrauliktank 14 zurückgeführt wird, wodurch der Hydraulikmotor 3 unter Trennung der Trennkupplung 10 abgeschaltet ist. Gleichzeitig wird der Elektromotor 2 - gesteuert durch den Elektroverteiler 11 und die Rechnereinheit 28 - mit elektrischer Energie des Generators 6 versorgt, wodurch die Arbeitsmaschine 1 im Dauerbetrieb in einem Lastbereich zwischen einschließlich Leerlauf und einschließlich Nennlast vom Elektromotor 2 angetrieben wird. Hierzu erfolgt, sofern nicht bereits zuvor geschehen, eine Ankopplung des Generators 6 an den Verbrennungsmotor 5 mittels der Trennkupplung 21. Zur Trennung des Hydraulikmotors 3 vom Elektromotor 2 kann eine Ausbildung der Trennkupplung 10 als Fliehkraftkupplung vorgesehen sein, die beim Absinken der Drehzahl des Hydraulikmotors 3 selbsttätig auskuppelt. Es kann auch zweckmäßig sein, eine aktive Auskupplung beispielsweise unter Einwirkung der Rechnereinheit 28 vorzusehen.

Der Schwungmassenantrieb 13 weist eine vergrößerte Schwungmasse auf, die im Dauerbetrieb im Bereich der Nennlast der Arbeitsmaschine 1 deren auftretende Drehmomentspitzen absenkt bzw. glättet. Die seitens des Elektromotors 2 aufzubringende Dauerleistung ist entsprechend verringert. Die elektrischen Energiequellen 4, der Elektromotor 2 und die elektrische Anlage insgesamt können bei geringem Energiebedarf klein dimensioniert sein.

Der im gezeigten Ausführungsbeispiel als Dieselmotor ausgeführte Verbrennungsmotor 5 hat beispielhaft zur Erzeugung eines Nennstromes von 363 A eine Nennleistung von etwa 200 kW. Der Generator 6 ist auf eine Leistung von 250 kVA ausgelegt, während die Hydraulikanlage mit der Hydraulikpumpe 9 und dem Hydraulikmotor 3 ebenso wie der Elektromotor 2 auf eine Leistung der Arbeitsmaschine 1 von 160 kW ausgelegt ist. Für die Summe aller elektrischen Kleinverbraucher 12 ist eine elektrische Leistung von etwa 46 kW angesetzt. Mit der vorgenannten Dimensionierung ist gleichermaßen die Spitzenlast an der Arbeitsmaschine 1 bei Anfahrbetrieb wie auch die Nennlast im Dauerbetrieb abdeckbar.

Zum Vergleich mit einer herkömmlichen Maschinenanlage nur mit dem Elektromotor 2 ohne den Hydraulikmotor 3 ist hervorzuheben, daß im Anfahrbetrieb, also bei der Inbetriebnahme der Arbeitsmaschine 1 aus dem Stillstand heraus und der Beschleunigung auf Nenndrehzahl ein Anlaufstrom im Elektromotor 2 beobachtet werden kann, der bis zu dem 2,5-fachen des Nennstromes im Dauerbetrieb beträgt. Zur Abdeckung einer solchen Spitzenlast wäre eine Auslegung des Dieselmotors auf etwa 440 kW und des Generators 6 auf etwa 550 kVA erforderlich. Bei einem reinen hydraulischen Antrieb und gleicher Leistung an der Arbeitsmaschine 1 wäre ein Verbrennungsmotor 5 mit einer Leistung von etwa 315 kW erforderlich. Im direkten Vergleich der Betriebskosten konnte ein mittleres Einsparpotential allein an Energiekosten von etwa 36% nachgewiesen werden.

Nach dem Hochfahren bzw. nach dem Anlaufbetrieb der Arbeitsmaschine 1 mittels des Hydraulikmotors 3 kann es auch zweckmäßig sein, den zugeschalteten Elektromotor 2 nicht über den Generator 6, sondern über den Netzanschluß 7 mit Strom zu versorgen. Hierbei liegt das Einsparpotential an Energiekosten im Bereich von 66%. Es ist auch die Möglichkeit gegeben, den Verbrennungsmotor 5 mit der Hydraulikpumpe 9 im Stand-by-Betrieb mitlaufen zu lassen. Betriebsbedingte Leistungsspitzen können bei im Bereich der Nennlast laufendem Elektromotor 2 unter Vermeidung von elektrischen Stromspitzen unter Zuschaltung des Hydraulikmotors 3 abgedeckt werden. Im eingekuppelten Zustand der Trennkupplung 10 sind dann der Elektromotor 2 und der Hydraulikmotor 3 gleichzeitig im Betrieb und wirken gemeinsam unter Addition ihrer Leistung auf die Arbeitsmaschine 1.

Es kann auch eine Ausführung zweckmäßig sein, bei der unter Verzicht auf den Verbrennungsmotor 5 und den Generator 6 als elektrische Energiequelle 4 allein der Netzanschluß 7 vorgesehen ist, der neben der Versorgung des elektrischen Motors 2 bedarfsweise auch die Hydraulikpumpe 9 mittels eines nicht dargestellten weiteren Elektromotors antreibt.

## Patentansprüche

1. Maschinenanlage umfassend eine Arbeitsmaschine (1), einen Elektromotor (2) und einen Hydraulikmotor (3), wobei der Elektromotor (2) für den Dauerbetrieb der Arbeitsmaschine (1) bis einschließlich der Nennlast bei abgeschaltetem Hydraulikmotor (3) vorgesehenen ist, wobei der Hydraulikmotor (3) für Spitzenlasten und den Anfahrbetrieb der Arbeitsmaschine (1) aus dem Stillstand heraus bis hin zum Bereich der Nennlast vorgesehen ist, sowie umfassend Mittel zum wahlweisen Zuschalten des Hydraulikmotors (3);
**dadurch gekennzeichnet dass**
zur Abdeckung von Spitzenlasten, nach erfolgtem Anfahren, der Hydraulikmotor nach Belieben dem im Bereich seiner Nennlast arbeitenden Elektromotor zugeschaltet wird.

2. Maschinenanlage nach Anspruch 1,
**dadurch gekennzeichnet, daß** als elektrische Energiequelle (4) für den Elektromotor (2) ein durch einen Verbrennungsmotor (5) angetriebener Generator (6) vorgesehen ist.

3. Maschinenanlage nach Anspruch 1 oder 2,
**dadurch gekennzeichnet, daß** als elektrische Energiequelle (4) für den Elektromotor (2) ein Netzanschluß (7) vorgesehen ist.

4. Maschinenanlage nach den Ansprüchen 2 und 3,
**dadurch gekennzeichnet, daß** als elektrische Energiequelle (4) für den Elektromotor (2) der Generator (6) und der Netzanschluß (7) vorgesehen und wahlweise zuschaltbar sind.

5. Maschinenanlage nach einem der Ansprüche 1 bis 4,
**dadurch gekennzeichnet, daß** als Energiequelle (8) für den Hydraulikmotor (3) eine durch einen Verbrennungsmotor (5) angetriebene Hydraulikpumpe (9) vorgesehen ist.

6. Maschinenanlage nach Anspruch 5,
**dadurch gekennzeichnet, daß** der Generator (6) und die Hydraulikpumpe (9) durch den gleichen Verbrennungsmotor (5) angetrieben sind.

7. Maschinenanlage nach einem der Ansprüche 1 bis 6"
**dadurch gekennzeichnet, daß** der Elektromotor (2) und der Hydraulikmotor (3) mechanisch in Reihe geschaltet sind und auf die Arbeitsmaschine (1) wirken.

8. Maschinenanlage nach Anspruch 7,
**dadurch gekennzeichnet, daß** zwischen dem Elektromotor (2) und dem Hydraulikmotor (3) eine Trennkupplung (10) angeordnet ist.

9. Maschinenanlage nach einem der Ansprüche 1 bis 8,
**dadurch gekennzeichnet, daß** zwischen der elektrischen Energiequelle (4) und dem Elektromotor (2) ein Elektroverteiler (11) angeordnet ist, an dem zusätzlich zur Arbeitsmaschine (1) mindestens ein elektrischer Kleinverbraucher (12) angeschlossen ist.

10. Maschinenanlage nach einem der Ansprüche 1 bis 9,
**dadurch gekennzeichnet, daß** die Arbeitsmaschine (1) einen Schwungmassenantrieb (13) aufweist.

## Claims

1. Machine unit comprising a working machine (1), an electric motor (2) and a hydraulic motor (3), wherein the electric motor (2) is provided for continuous operation of the working machine (1) up to and including the nominal load when the hydraulic motor (3) is switched off, wherein the hydraulic motor (3) is provided for peak loads and the startup operation of the working machine (1) from standstill up to the range of the nominal load, and comprising means for optionally connecting the hydraulic motor (3),
**characterised in that**
in order to cover peak loads after startup is complete, the hydraulic motor is connected as desired to the electric motor which is operating in the range of its nominal load.

2. Machine unit according to Claim 1,
**characterised in that** a generator (6) which is driven by an internal combustion engine (5) is provided as the electrical energy source (4) for the electric motor (2).

3. Machine unit according to Claim 1 or 2,
**characterised in that** a mains power connection (7) is provided as the electrical energy source (4) for the electric motor (2).

4. Machine unit according to Claims 2 and 3,
**characterised in that** the generator (6) and the mains power connection (7) are provided as the electrical energy source (4) for the electric motor (2) and can be connected optionally.

5. Machine unit according to one of Claims 1 to 4,
**characterised in that** a hydraulic pump (9) which is driven by an internal combustion engine (5) is provided as the energy source (8) for the hydraulic motor (3).

6. Machine unit according to Claim 5,
**characterised in that** the generator (6) and the hydraulic pump (9) are driven by the same internal combustion engine (5).

7. Machine unit according to one of Claims 1 to 6,
**characterised in that** the electric motor (2) and the hydraulic motor (3) are mechanically connected in series and act on the working machine (1).

8. Machine unit according to Claim 7,
**characterised in that** a disconnecting clutch (10) is arranged between the electric motor (2) and the hydraulic motor (3).

9. Machine unit according to one of Claims 1 to 8,
**characterised in that** an electrical distributor (11) is arranged between the electrical energy source (4) and the electric motor (2), to which electrical distributor at least one small electrical consumer (12) is connected in addition to the working machine (1).

10. Machine unit according to one of Claims 1 to 9,
**characterised in that** the working machine (1) has a flywheel drive (13).

## Revendications

1. Installation motrice comprenant une machine de travail (1), un moteur électrique (2) et un moteur hydraulique (3), le moteur électrique (2) étant prévu pour le fonctionnement continu de la machine de travail (1) jusqu'à y compris la charge nominale lorsque le moteur hydraulique (3) est déconnecté, le moteur hydraulique (3) étant prévu pour des charges de pointe et le fonctionnement de démarrage de la machine de travail (1) étant prévu à partir de l'arrêt jusqu'à la plage de la charge nominale, et comprenant des moyens pour la mise en circuit optionnelle du moteur hydraulique (3) ;
**caractérisé en ce que,**
pour couvrir des charges de pointe, une fois le démarrage effectué, le moteur hydraulique est mis en circuit à volonté avec le moteur électrique travaillant dans la plage de sa charge nominale.

2. Installation de machine selon la revendication 1,
**caractérisé en ce que**
un générateur (6) entraîné par un moteur à combustion (5) est prévu comme source d'énergie (4) électrique pour le moteur électrique (2).

3. Installation de machine selon la revendication 1 ou 2,
**caractérisé en ce qu'**un raccordement au réseau (7) est prévu comme source d'énergie (4) électrique pour le moteur électrique (2).

4. Installation de machine selon les revendications 2 et 3,
**caractérisé en ce que** le générateur (6) et le raccordement au réseau (7) sont prévus et peuvent être mis en circuit de façon optionnelle comme source d'énergie (4) électrique pour le moteur électrique (2).

5. Installation de machine selon l'une quelconque des revendications 1 à 4,
**caractérisé en ce qu'**une pompe hydraulique (9) entraîné par un moteur à combustion (5) est prévue comme source d'énergie (8) pour le moteur hydraulique (3).

6. Installation de machine selon la revendication 5,
**caractérisé en ce que** le générateur (6) et la pompe hydraulique (9) sont entraînés par le même moteur à combustion (5).

7. Installation de machine selon l'une quelconque des revendications 1 à 6,
**caractérisé en ce que** le moteur électrique (2) et le moteur hydraulique (3) sont branchés en série au plan mécanique et agissent sur la machine de travail (1).

8. Installation de machine selon la revendication 7,
**caractérisé en ce qu'**un accouplement de séparation (10) est disposé entre le moteur électrique (2) et le moteur hydraulique (3).

9. Installation de machine selon l'une quelconque des revendications 1 à 8,
**caractérisé en ce qu'**entre la source d'énergie (4) électrique et le moteur électrique (2) est disposé un répartiteur électrique (11), auquel est raccordé en supplément de la machine de travail (1) au moins un petit consommateur (12) électrique.

10. Installation de machine selon l'une quelconque des revendications 1 à 9,
**caractérisé en ce que** la machine de travail (1) présente un entraînement par masse centrifuge (13).
